# EUROPEAN PATENT APPLICATION

(11) **EP 4 571 961 A1**
(43) Date of publication of application: **18.06.2025**
(21) Application number: 22960105.9
(22) Date of filing: 29.09.2022
(51) Int. Cl.: H01M 50/15, H01M 50/152, H01M 50/169

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Shengwang, Ningde, Fujian 352100 (CN); GUO, Zhijun, Ningde, Fujian 352100 (CN)
(74) Representative: Gong, Jinping
(86) International application number: PCT/CN2022/122823
(87) International publication number: WO 2024/065468

(57) **Abstract**

The embodiments of the present disclosure provide a battery cell, battery, and electrical device, relating to the technology field of batteries, which comprise a shell, an electrode assembly, and an end cap. The shell is provided with an opening; the electrode assembly is accommodated within the shell; the end cap is arranged at one end of the shell along a first direction and closing the opening, wherein the end cap comprises a cover body and a connecting part; the connecting part is arranged around an outer side of the cover body; and the connecting part is sealingly connected to the shell. Along the first direction, the cover body is provided with a first outer surface away from the electrode assembly; the first outer surface is a surface of the end cap farthest from the electrode assembly; and the connecting part is closer to the electrode assembly than the first outer surface. Thus, after the connecting part is connected to the shell, it is less likely to affect the first outer surface, making it easier to ensure the smoothness of the first outer surface. This improves the stability of the battery cell when the first outer surface serves as a supporting surface.

## Description

### Technical Field

The present disclosure relates to the technical field of electrical devices, in particular to a battery cell, a battery, and an electrical device.

### Background Art

With the development of new energy technologies, the application of batteries is becoming increasingly widespread. For example, they are used in mobile phones, laptops, electric bicycles, electric cars, electric airplanes, electric ships, electric toy cars, electric toy ships, electric toy airplanes, and electric tools.

In the battery, the battery cell needs to maintain good stability within the box to achieve a stable connection between the battery cells and theconductive components. Hence, how to improve the stability of the battery cell is a pressing technical issue to be solved in battery technology.

### Summary

The embodiments of the present disclosure provide a battery cell, battery, and electrical device, which can effectively improve the stability of the battery cell.

The embodiments of the present disclosure provide a battery cell comprising a shell, an electrode assembly, and an end cap. The shell is provided with an opening; the electrode assembly is accommodated within the shell; the end cap is arranged at one end of the shell along a first direction and closing the opening, wherein the end cap comprises a cover body and a connecting part; the connecting part is arranged around an outer side of the cover body; and the connecting part is sealingly connected to the shell. Along the first direction, the cover body is provided with a first outer surface away from the electrode assembly; the first outer surface is a surface of the end cap farthest from the electrode assembly; and the connecting part is closer to the electrode assembly than the first outer surface.

In the above technical solution, the first outer surface is the surface of the end cap farthest from the electrode assembly, and the first outer surface can serve as a supporting surface for the battery cell. The connecting part is closer to the electrode assembly than the first outer surface. After the connecting part is connected to the shell, it is less likely to affect the first outer surface, making it easier to ensure the smoothness of the first outer surface. This improves the stability of the battery cell when the first outer surface serves as a supporting surface.

In some embodiments, the connecting part is welded to the shell, forming a welded portion; along the first direction, the welded portion does not extend beyond the first outer surface in a direction away from the electrode assembly. Thus, the welded portion does not protrude beyond the first outer surface, thus reducing the impact of the welded portion, formed by welding the connecting part to the shell, on the first outer surface. This improves the stability of the battery cell when the first outer surface serves as a supporting surface.

In some embodiments, along the first direction, the welded portion is closer to the electrode assembly than the first outer surface. In this way, the effect of the welded portion on the first outer surface can be further reduced.

In some embodiments, along the first direction, the connecting part is provided with a second outer surface away from the electrode assembly; and a distance between the second outer surface and the first outer surface is H, satisfying 0.2mm≤H≤0.8mm. The H is set within a reasonable range. On one hand, maintaining a certain distance between the second outer surface and the first outer surface can reduce the impact of the second outer surface on the first outer surface. On the other hand, ensuring that the end cap does not occupy an excessively large space outside the battery cell due to a too large H is beneficial for increasing the energy density of the battery.

In some embodiments, 0.4mm≤H≤0.6mm. In this way, on one hand, maintaining a larger distance between the second outer surface and the first outer surface can further reduce the impact of the second outer surface on the first outer surface. On the other hand, ensuring that the end cap does not occupy an excessively large space outside the battery cell due to a too large H is beneficial for increasing the energy density of the battery.

In some embodiments, the end cap further comprises a transition part, and the transition part connects the cover body and the connecting part. The transition part enables a certain distance to be maintained between the connecting portion and the cover body, thus reducing the impact of the connecting part, after being connected to the shell, on the cover body.

In some embodiments, the transition part is arranged around an outer side of the cover body, and the connecting part is arranged around an outer side of the transition part; and along the first direction, at least a portion of the transition part protrudes from the cover body in a direction facing the electrode assembly. Thus, the transition part can strengthen the end cap, thus enhancing the resistance of the end cap to deformation. This ensures that the end cap is less prone to deformation when subjected to external forces from the battery cell or internal forces within the battery cell, thereby improving the impact resistance of the end cap.

In some embodiments, at least a portion of the transition part is arranged inside the shell and forms a location fit with the shell. This improves the efficiency of the assembly of the end cap to the shell and facilitates the connection of the end cap to the shell.

In some embodiments, along the first direction, a position of a side of the end cap away from the electrode assembly, corresponding to the transition part, is provided with a first concave portion. The arrangement of the first concave portion enhances the reinforcing effect of the transition part on the end cap. Additionally, it simplifies the forming process of the transition part. During forming, the first concave portion can be stamped on the end cap to form a transition part protruding from the cover body in the direction facing the electrode assembly.

In some embodiments, the connecting part and the shell are arranged along the first direction; an end of the shell arranged with the opening forms a first end surface; and the connecting part is connected to the first end surface. The connecting part and the shell are arranged in the first direction. The first end surface can limit the end cap, which limits the movement of the end cap in the direction closer to the electrode assembly, thus facilitating the connection of the end cap to the shell.

In some embodiments, the connecting part is welded to the first end surface. The method of fixing the connecting part to the shell is simple, thus enhancing the firmness of the connection of the connecting part to the shell. By welding the connecting part to the first end surface, a sealed connection between the end cap and the shell can be achieved.

In some embodiments, the connecting part is connected to an inner peripheral surface of the shell. This structure simplifies the structure of the end cap. Moreover, during the assembly of the end cap and the shell, the position of the end cap along the first direction can be adjusted as needed before fixing the end cap and the shell.

In some embodiments, the connecting part is welded to the inner peripheral surface of the shell. The method of fixing the connecting part to the shell is simple, thus enhancing the firmness of the connection of the connecting part to the shell. By welding the connecting part to the inner peripheral surface of the shell, a sealed connection between the end cap and the shell can be achieved.

In some embodiments, the transition part comprises a first part and a second part; the first part is arranged around the outer side of the cover body, and the connecting part is arranged around an outer side of the first part; the second part connects the first part and the connecting part; and the first part, the second part, and the connecting part together define a first concave portion facing away from the electrode assembly. This structure, of which the transition part and the connecting part are as a whole, can strengthen the end cap, thus enhancing the deformation capacity of the end cap. This ensures that the end cap is less prone to deformation when subjected to external forces from the battery cell or internal forces within the battery cell, thereby improving the impact resistance of the end cap.

In some embodiments, along the first direction, the connecting part is provided with a second outer surface away from the electrode assembly; an end of the shell arranged with the opening forms a first end surface; and the second outer surface is flush with the first end surface. This structure allows the first end surface to be closer to the electrode assembly than the first outer surface, thus reducing the impact of the first end surface on the first outer surface. This improves the stability of the battery cell when the first outer surface serves as a supporting surface. In addition, the first end surface is flush with the second outer surface, which makes it easier to achieve a stable welding of the connecting part and the shell, and improves the firmness of the connecting part and the shell after welding.

In some embodiments, the electrode assembly is provided with a first tab; the transition part is connected to the first tab to achieve an electrical connection between the end cap and the electrode assembly. The transition part is the portion of the end cap that is connected to the first tab; and by connecting the transition part to the first tab, an electrical connection between the end cap and the electrode assembly is achieved.

In some embodiments, along the first direction, the transition part abuts against the first tab. This allows the transition part to be directly connected to the first tab, thus simplifying the structure of the battery cell.

In some embodiments, the battery cell further comprises a current collector component, and the current collector component connects the transition part and the first tab; along the first direction, the current collector component is arranged between the first tab and the end cap, with the transition part abutting against the current collector component. This allows the transition part to indirectly connect to the first tab via the current collector component, thereby achieving good current flow between the first tab and the end cap.

In some embodiments, the first outer surface is configured to support the battery cell. The first outer surface is a supporting surface for supporting the battery cell, thus providing good stability when the battery cell is placed on external components.

In some embodiments, the cover body is provided with a weak part, and the weak part is configured to be damaged when the battery cell is relieved of pressure so as to release the pressure inside the battery cell. When the pressure inside the battery cell reaches the bursting pressure, the weak part will be damaged, thus achieving pressure relief for the battery cell. The arrangement of the weak part enables the end cap to have the functionality of pressure relief, and the end cap can serve as a pressure relief component for the battery cell.

In some embodiments, along the first direction, the cover body is provided with a second concave portion that is concave from the first outer surface in a direction towards the electrode assembly; and a projection of a bottom surface of the second concave portion covers the weak part. The arrangement of the second concave portion ensures that there is a certain distance between the weak part and the first outer surface. When the first outer surface contacts external components, it reduces the impact of external components on the weak part. This allows the weak part to be smoothly damaged when the pressure inside the battery cell reaches the normal bursting pressure, which reduces the risk of an increased bursting pressure of the battery cell due to the obstruction to the weak part by the external components.

In some embodiments, along the first direction, the cover body is provided with a first inner surface facing the electrode assembly, and the first inner surface is provided with a protrusion at a position corresponding to the second concave portion. The arrangement of the protrusion can increase the strength of a region on the cover body where the second concave portion is arranged.

In some embodiments, along the first direction, the protrusion is provided with a second inner surface facing the electrode assembly; the second inner surface and/or the bottom surface of the second concave portion are provided with a scored groove; and the cover body forms the weak part at a position corresponding to the scored groove. By arranging the scored groove on the second inner surface and/or the bottom surface of the second concave portion, a weak part is correspondingly formed, making the thickness of the weak part thinner compared to the thickness of the other regions, which is easier to damage. This method simplifies the formation of the weak part.

In some embodiments, the end cap is circular in shape; the first outer surface is provided with a first outer edge and a first inner edge, wherein the first outer surface intersects with an inner side surface of the second concave portion at the first inner edge; and along a radial direction of the end cap, a distance between the first outer edge and the first inner edge is D, and a radius of the end cap is R, satisfying: D/R≥0.1. This allows the first outer surface to have a larger area such that the first outer surface has a large contact area after contact with the external components, thus enhancing the stability of the battery cell.

In some embodiments, D/R≤0.4. If D/R is too large, it can result in a smaller size of the second concave portion in the radial direction of the end cap; the weak part is constrained by the second concave portion and cannot be made larger, resulting in a smaller pressure relief area for the end cap. Therefore, it becomes difficult to meet the requirements for the bursting pressure of the battery cell. Therefore, while D/R ≤ 0.4, the pressure relief area of the end cap can be increased to meet the requirements for the bursting pressure of the battery cell.

In some embodiments, the cover body is provided with a scored groove; and the cover body forms the weak part at a position corresponding to the scored groove. By arranging the scored groove on the cover body, a weak part is correspondingly formed, making the thickness of the weak part thinner compared to the thickness of the other regions and, which is easier to damage. This method simplifies the formation of the weak part.

In some embodiments, the cover body is provided with a pressure relief region; the scored groove is arranged along an edge of the pressure relief region; and the pressure relief region is configured to open with the scored groove as a boundary when the battery cell is relieved of pressure. This structure increases the pressure relief area of the battery cell and improves the efficiency of the pressure relief.

In some embodiments, the scored groove is a groove extending along a closed trajectory. When the battery cell is relieving pressure, the pressure relief region can be opened in a manner that is detached from the outside of the battery cell. This enables the battery cell to have a larger pressure relief area, which improves the efficiency of the pressure relief.

In some embodiments, the scored groove is ring-shaped. The ring-shaped scored groove has a simple structure and is easy to mold.

In some embodiments, the battery cell further comprises an electrode terminal; along the first direction, the shell is provided with a wall portion opposite to the end cap, and the electrode terminal is arranged on the wall portion and protrudes at least partially from a surface of the wall portion away from the end cap; and the electrode assembly is provided with a second tab, wherein the second tab is electrically connected to the electrode terminal. The electrode terminal is arranged on the wall portion of the shell opposite to the end cap and the electrode terminal is not arranged on the end cap, thus allowing the end cap to serve as a supporting component for the battery cell. Therefore, the first outer surface of the end cap can make good contact with external components, thus providing stable support for the battery cell by external components.

In some embodiments, the shell is of cylinder or polygon prism.

In the second aspect, the embodiments of the present disclosure provide a battery, comprising any one of the battery cells provided in any embodiments of the first aspect above.

In the second aspect, the embodiments of the present disclosure provide an electrical device, comprising the battery provided in any of the embodiments of the second aspect above.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is an exploded view of the battery cell provided in some embodiments of the present disclosure;
FIG. 4 is a schematic diagram of the structure of the battery cell shown in FIG. 3;
FIG. 5 is a partial sectional view of the battery cell shown in FIG. 4;
FIG. 6 is a partially enlarged view at part A of the battery cell shown in FIG. 5;
FIG. 7 is a schematic diagram of the structure of the end cap shown in FIG. 6;
FIG. 8 is a schematic diagram of a structure of a battery cell provided in some other embodiments of the present disclosure;
FIG. 9 is a partially sectional view of the battery cell shown in FIG. 8;
FIG. 10 is a partially enlarged view at part B of the battery cell shown in FIG. 9;
FIG. 11 is a schematic diagram of the structure of the end cap shown in FIG. 10;
FIG. 12 is a partial view of the battery cell provided in some other embodiments of the present disclosure;
FIG. 13 is an axonometric view of the end cap shown in FIG. 7;
FIG. 14 is a structural schematic diagram of a shell provided in some embodiments of the present disclosure; and
FIG. 15 is a structural schematic diagram of a shell provided in some other embodiments of the present disclosure.

Reference numerals: 1- shell; 11- first end surface; 12- wall portion; 2- electrode assembly; 21- first tab; 22- second tab; 3- end cap; 31- cover body; 311- first outer surface; 3111- first outer edge; 3112- first inner edge; 312- first inner surface; 313-weak part; 314- second concave portion; 315- protrusion; 3151- second inner surface; 316- scored groove; 317- pressure relief region; 32- connecting part; 321- second outer surface; 33- transition part; 331- first part; 332- second part; 333- third inner surface; 34- first concave portion; 4- electrode terminal; 5- current collector component; 6- welded portion; 10- battery cell; 20- box; 201-first accommodating part; 202- second accommodating part; 100- battery; 200- controller; 300- motor; 1000- vehicle; Z- first direction.

### Detailed Description of Embodiments

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other.

In the present disclosure, the term "and/or" is used as a way to describe the relationship between associated objects, indicating that there can be three possible relationships. For example, "A and/or B" can represent: the presence of A alone, the presence of both A and B, or the presence of B alone. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-lithium ion batteries, sodium-ion batteries, magnesium-ion batteries. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, prismatic battery cells, and soft pack battery cells. The embodiments of the embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. Batteries typically comprise a box that is configured to encapsulate one or multiple battery cells. The box helps to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive current collector and a positive active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative tab. The material of the negative electrode current collector can be copper, and the negative active material can be carbon or silicon, and so on. To ensure that there is no fuse blow during high current flow, the number of positive tabs is plurality and stacked together, and the number of negative tabs is plurality and stacked together. The material of the separator can be PP (polypropylene), PE (polyethylene), and so on. Furthermore, the electrode assembly can be a wound structure or a stacked structure. The embodiments of the present disclosure are not limited herein.

In the battery cell, the end cap can serve as a supporting component for the battery cell, and the external components (such as the bottom wall of the box, hot management components) can support the end cap, which enables support for the battery cell so as to keep the battery cell in a stable and upright position. This facilitates the connection of the battery cell with the conductive components, such as welding the electrode terminal of the battery cell with the busbar component. When the end cap serves as a supporting component for the battery cell, the end cap is arranged on the external component and the supporting surface of the end cap abuts against the external component. It is necessary to ensure that the support surface of the end cap has good flatness to ensure the stability of the battery cell.

The inventors noted that after the end cap is fixed to the shell, the support surface of the end cap is prone to being uneven, which leads to a reduction in the area of the end cap contacting with the external component after being placed on the external component, thus resulting in poor stability of the battery cell.

The inventors have found that for a general end cap, which is a flat plate structure, a surface of the end cap away from the shell in the thickness direction serves as a support surface for the end cap. After the end cap is fixed to the shell, the end cap and the shell can partially protrude at the connection position, thus affecting the flatness of the supporting surface of the end cap. Therefore, the supporting surface of the end cap cannot make extensive contact with the external components, thus leading to poor stability of the battery cell when placed on the external components. For instance, after welding the end cap to the shell, the end cap is welded to the shell to form a welded portion. The welded portion can protrude from the supporting surface of the end cap, thus affecting the flatness of the supporting surface.

In view of this, the embodiments of the present disclosure provide a battery cell, wherein the end cap is provided in a structure including a cover body and a connecting part. The connecting part is arranged around an outer side of the cover body, and the connecting part is sealingly connected to the shell. The first outer surface of the cover body away from the electrode assembly is the surface of the end cap furthest from the electrode assembly. The connecting part is closer to the electrode assembly than the first outer surface.

In such battery cell, the first outer surface is the surface of the end cap farthest from the electrode assembly, and the first outer surface can serve as a supporting surface for the battery cell. The connecting part is closer to the electrode assembly than the first outer surface. After the connecting part is connected to the shell, it is less likely to affect the first outer surface, making it easier to ensure the smoothness of the first outer surface. This improves the stability of the battery cell when the first outer surface serves as a supporting surface.

The battery cells described in the embodiments of the present disclosure are applicable to batteries and electrical devices that utilize the batteries.

The electrical devices can include vehicles, mobile phones, portable devices, laptops, ships, spacecraft, electric toys, electric tools, and more. Vehicles can be gasoline cars, gas cars, or new energy vehicles. New energy vehicles can include pure electric vehicles, hybrid vehicles, or extended-range vehicles. Aerospace vehicles comprise airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators, and electric planers, among others. The embodiments of the present disclosure do not impose any specific restrictions on the aforementioned electrical devices.

The following embodiments are explained using the example of vehicles as the electrical devices for the sake of convenience.

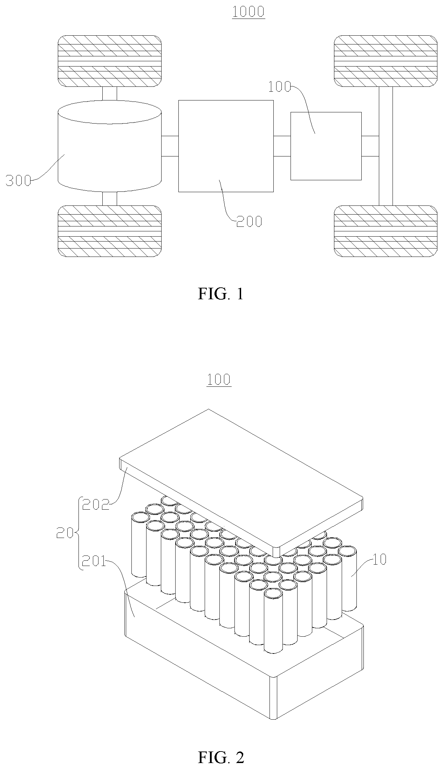

Referring to FIG. 1, FIG. 1 is a schematic diagram of a structure of a vehicle 1000 provided in some embodiments of the present disclosure. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000.

Additionally, the vehicle 1000 also comprises a controller 200 and a motor 300. The controller 200 is configured to manage the supply of power from the battery 100 to the motor 300, e.g., for working power requirements for starting, navigating, and driving of the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of a battery 100 provided in some embodiments of the present disclosure. The battery 100 comprises a battery cell 10 and a box 20, wherein the box 20 is configured to contain the battery cell 10.

The box 20 is a component that contains the battery cell 10, and the box 20 provides an accommodating space for the battery cell 10. The box 20 can have various structures. In some embodiments, the box 20 can comprise a first accommodating part 201 and a second accommodating part 202, wherein the first accommodating part 201 and the second accommodating part 202 are capped with each other to define the accommodating space configured to accommodate the battery cell 10. The first accommodating part 201 and the second accommodating part 202 can be in various shapes, such as rectangular, cylindrical, and so on. The first accommodating part 201 can be in a hollow structure opened on one side, and the second accommodating part 202 can also be in a hollow structure opened on one side. The open side of the second accommodating part 202 can be capped over the open side of the first accommodating part 201, thereby forming a box 20 with an accommodating space. It is also possible for the first accommodating part 201 to be in a hollow structure opened on one side, and the second accommodating part 202 to be a plate-like structure. The second accommodating part 202 can be capped over the open side of the first accommodating part 201, thereby forming a box 20 with an accommodating space. The first accommodating part 201 and the second accommodating part 202 can be sealed using sealing components, wherein the sealing components can include sealing rings, sealing adhesive, and so on.

In the battery 100, the battery cell 10 can be in a number of one or multiple. If there are multiple battery cells 10, the multiple battery cells 10 can be connected in series, parallel, or hybrid. Hybrid connection refers to having both series and parallel connections among multiple battery cells 10. The multiple battery cells 10 can be first connected in series, parallel, or hybrid to form battery modules, and then the multiple battery modules can be connected in series, parallel, or hybrid to form a whole, which is accommodated in the box 20. Alternatively, all battery cells 10 can be directly connected in series, parallel, or hybrid, and the whole formed by all the battery cells 10 is then accommodated in the box 20.

In some embodiments, the battery 100 can also comprise a busbar component. The multiple battery cells 10 can be electrically connected through the busbar component to achieve series, parallel, or hybrid connection of the battery cells 10. The busbar component can be a metallic conductor, such as copper, iron, aluminum, stainless steel, aluminum alloy.

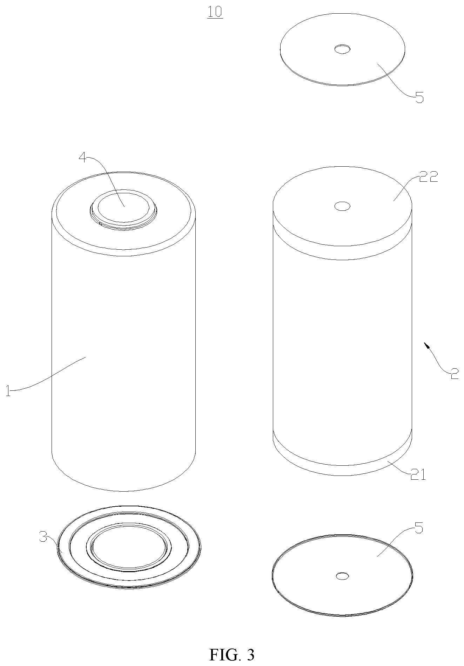

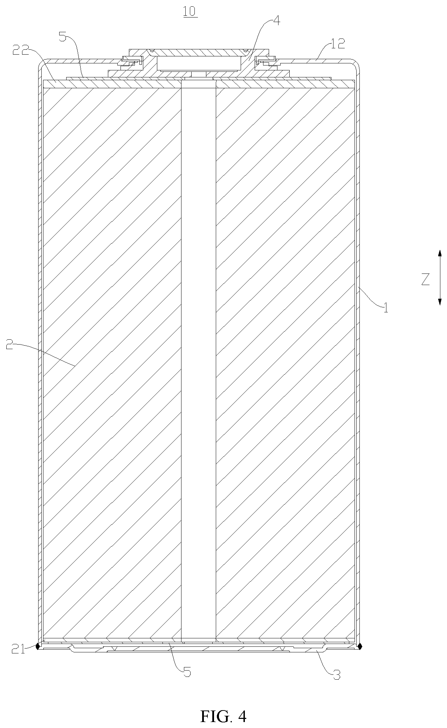

Referring to FIGS. 3 and 4, FIG. 3 is a schematic diagram of a structure of a battery cell 10 provided in some embodiments of the present disclosure; FIG. 4 is a schematic diagram of the structure of the battery cell 10 shown in FIG. 3. The battery cell 10 comprises a shell 1, an electrode assembly 2, and an end cap 3.

The shell 1 is a component for accommodating the electrode assembly 2. The shell 1 can be in a hollow structure with an opening formed at one end, or the shell 1 can be in a hollow structure with openings formed at two opposite ends. The shell 1 can be in various shapes, such as cylinder, cuboid, and so on. The material of the shell 1 can be diverse, such as copper, iron, aluminum, steel, aluminum alloy, and so on.

The electrode assembly 2 is the component within the battery cell 10 where electrochemical reactions occur. The electrode assembly 2 can comprise a positive electrode sheet, a negative electrode sheet, and a separator. The electrode assembly 2 can be in the form of a wound structure formed by winding a positive electrode sheet, a separator, and a negative electrode sheet together. It can also be in the form of a stacked structure formed by layering a positive electrode sheet, a separator, and a negative electrode sheet. The electrode assembly 2 is provided with a first tab 21 and a second tab 22. The first tab 21 and the second tab 22 can be positioned at opposite ends of the electrode assembly 2. One of the first tabs 21 and the second tab 22 serves as the positive tab, and the other serves as the negative tab. The positive tab can be the portion of the positive electrode sheet that is not coated with a positive electrode active material layer. The negative tab can be the portion of the negative electrode sheet that is not coated with a negative electrode active material layer.

The end cap 3 is a component that seals the opening of the shell 1, thereby isolating the internal environment of the battery cell 10 from the external environment. The end cap 3, together with the shell 1, defines a sealed space configured to accommodate the electrode assembly 2, electrolyte, and other components. The shape of the end cap 3 can be adapted to the shape of the shell 1. For example, if the shell 1 is a cuboid structure, the end cap 3 is a rectangular plate-like structure that fits with the shell 1. Similarly, if the shell 1 is a cylindrical structure, the end cap 3 can be a circular structure that fits with the shell 1. The material of the end cap 3 can also be diverse, including copper, iron, aluminum, steel, aluminum alloy, and more. The end cap 3 and the shell 1 can be connected in welding.

In the battery cell 10, one or two end caps 3 can be provided. If the shell 1 is a hollow structure with an opening formed at one end, one end cap 3 can be provided in correspondence. If the shell 1 is a hollow structure with openings formed at both ends, two end caps 3 can be provided in correspondence, and the two end caps 3 seal the two openings of the shell 1 respectively.

In some embodiments, the battery cell 10 can also be provided with an electrode terminal 4, wherein the electrode terminal 4 is configured to electrically connect to the electrode assembly 2, thus enabling the output of electrical energy from the battery cell 10. The electrode terminal 4 can be provided in the end cap 3 or in the shell 1. Taking the hollow structure formed by the shell 1 with openings at both ends as an example, the battery cell 10 is provided with two end caps 3. The two end caps 3 correspondingly seal the two openings of casing 1. The electrode terminal 4 can be arranged on one end cap 3, and the other end cap 3 can serve as a supporting component for battery cell 10. As shown in FIG. 3, taking the hollow structure formed by the shell 1 with an opening at one end as an example, an end cap 3 is provided in the battery cell 10, and the end cap 3 seals the opening of the shell 1. The electrode terminal 4 can be arranged on a wall portion 12 of the shell 1 opposite to the end cap 3, wherein the end cap 3 can be electrically connected to the first tab 21 of the electrode assembly 2 and the end cap 4 is electrically connected to the second tab 22 of the electrode assembly 2.

The end cap 3 and the first tab 21 can be connected directly or indirectly. The electrode terminal 4 and the second tab 22 can be connected directly or indirectly. Exemplarily, in FIG. 3, the end cap 3 is indirectly connected to the first tab 21 through a current collector component 5, and the electrode terminal 4 is indirectly connected to the second tab 22 through another current collector component 5. The current collector component 5 can be a metallic conductor, such as copper, iron, aluminum, steel, aluminum alloy. The current collector component 5 can be disk-shaped.

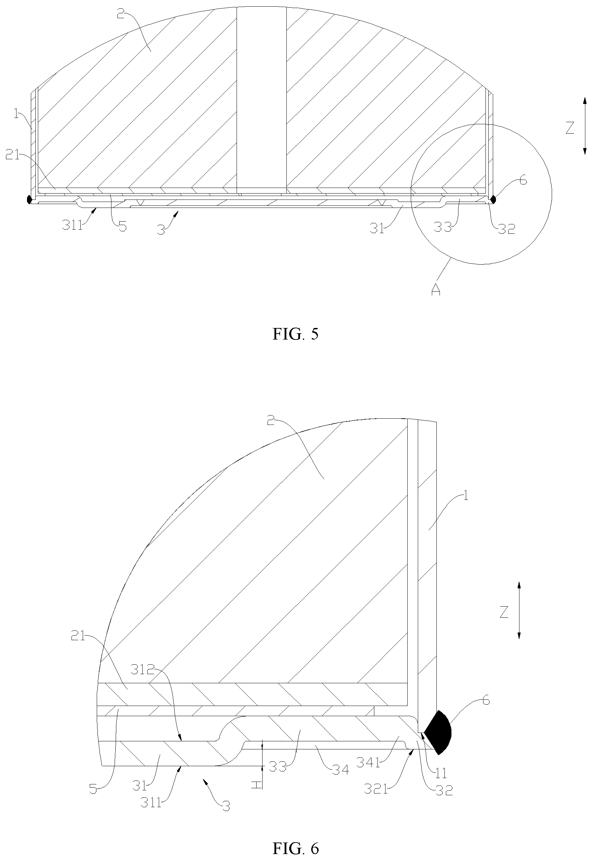

Referring to FIG. 5, FIG. 5 is a partial sectional view of the battery cell 10 shown in FIG. 4. The embodiments of the present disclosure provide a battery cell 10, wherein the battery cell 10 comprises a shell 1, an electrode assembly 2, and an end cap 3. The shell 1 is provided with an opening. The electrode assembly 2 is accommodated within the shell 1; the end cap 3 is arranged at one end of the shell 1 along a first direction Z and closes the opening, wherein the end cap 3 comprises a cover body 31 and a connecting part 32; the connecting part 32 is arranged around an outer side of the cover body 31; and the connecting part 32 is sealingly connected to the shell 1. Along the first direction Z, the cover body 31 is provided with a first outer surface 311 away from the electrode assembly 2; the first outer surface 311 is a surface of the end cap 3 farthest from the electrode assembly 2; and the connecting part 32 is closer to the electrode assembly 2 than the first outer surface 311.

The cover body 31 is the main part of the end cap 3, and the cover body 31 is located on the inner side of the connecting part 32. Taking the circular structure of the end cap 3 as an example, the cover body 31 can be a circular region located on the inner side of the connecting part 32. Along the radial direction of the end cap 3, the connecting part 32 is further away from the central axis of the end cap 3 compared to the cover body 31.

The connecting part 32 is the portion that connects the end cap 3 to the shell 1, and the connecting part 32 can be the edge portion of the end cap 3. Taking the circular structure of the end cap 3 as an example, the connecting part 32 is a ring-shaped region of the end cap 3 surrounding the cover body 31. The connecting part 32 can be connected to the cover body 31 either directly or indirectly. Taking the direct connection between the connecting part 32 and the cover body 31 as an example, the connecting part 32 can be directly connected to the outer edge of the cover body 31. Taking the indirect connection between the connecting part 32 and the cover body 31 as an example, the end cap 3 also includes a portion arranged between the connecting part 32 and the cover body 31. Through the portion, the connecting part 32 is connected to the cover body 31.

The connecting part 32 is hermetically connected to the shell 1, forming a seal after the connecting part 32 is connected to the shell 1. This prevents the electrolyte inside the battery cell 10 from flowing out from the connection interface between the connecting part 32 and the shell 1. The connecting part 32 can be hermetically connected to the shell 1 through various methods. The connecting part 32 and the shell 1 can be welded or bonded, etc. Alternatively, the sealed connection between the connecting part 32 and the shell 1 can be achieved through a sealing structure. For example, a roll groove can be arranged circumferentially on the outer peripheral surface of the shell 1, and a limit projection can be formed on the inner side of the shell 1. One end of the shell 1, provided with an opening, forms a flanging portion. The limit projection and the flanging portion are located on both sides of the connecting part 32 in the thickness direction of the end cap 3. The limit projection cooperates with the flanging portion to limit the connecting part 32, thereby limiting the movement of the end cap 3 relative to the shell 1 along the thickness direction. In the structure, a sealing member can be arranged between the shell 1 and the connecting part 32 to achieve a sealed connection between the two.

The first outer surface 311 is the surface of the cover body 31 away from the electrode assembly 2 along the first direction Z, and it is also the surface of the end cap 3 farthest from the electrode assembly 2 along the first direction Z. The first outer surface 311 can be the surface of the battery cell 10 farthest from the electrode assembly 2 along the first direction Z. The first outer surface 311 can be a rectangular plane, a circular plane, etc. Taking the circular structure of the end cap 3 as an example, the first outer surface 311 can be a circular plane or annular plane located in the central region of the end cap 3. The connecting part 32 is closer to the electrode assembly 2 than the first outer surface 311 so as to enable a certain distance between the connecting part 32 and the first outer surface 311 along the first direction Z.

The first direction Z is the extending direction of the shell 1 and the thickness direction of the end cap 3. Taking the shell 1 of a cylindrical structure as an example, the first direction Z is the axial direction of the shell 1.

In the embodiments of the present disclosure, the first outer surface 311 is the surface of the end cap 3 farthest from the electrode assembly 2, and the first outer surface 311 can serve as a supporting surface for the battery cell 10. The connecting part 32 is closer to the electrode assembly 2 than the first outer surface 311. After the connecting part 32 is connected to the shell 1, it is less likely to affect the first outer surface 311, making it easier to ensure the smoothness of the first outer surface 311. This improves the stability of the battery cell 10 when the first outer surface 311 serves as a supporting surface.

In the case of welding the connecting part 32 to the shell 1, a welded portion 6 is formed between the connecting part 32 and the shell 1. Due to the height difference between the second outer surface 321 and the connecting part 32, an avoiding space is provided for the welded portion 6 to allow that the welded portion 6 does not protrude from the first outer surface 311. This ensures stability when the battery cell 10 serves as a supporting surface for the first outer surface 311. Additionally, it reduces the difficulty of welding the connecting part 32 to the shell 1 and effectively improves the welding efficiency of the connecting part 32 to the shell 1.

When mounting the battery cell 10, after arranging the battery cell 10 inside the box 20, placing the battery cell 10 on the external components enables a larger contact area between the first outer surface 311 and the supporting component. This allows a better posture of the battery cell 10 when placed on the external components, thereby enhancing the stability of the battery cell 10 after placement on the external components. The external components herein can be the bottom wall of the box 20, the hot management component, and so on. The hot management component is a component within the box 20 that manages the temperature of the battery cell 10, and the hot management component can be a water-cooling plate.

Since the first outer surface 311 is the surface of the end cap 3 farthest from the electrode assembly 2 along the first direction Z, the first outer surface 311 can serve not only as a supporting surface for the battery cell 10 but also as a surface for connecting with other components. For example, when multiple battery cells 10 are connected electrically through a busbar component, the busbar component can be connected to the first outer surface 311. This allows the busbar component to make a large-area contact with the first outer surface 311, enabling a large-area current flow between the busbar component and the end cap 3.

In some embodiments, referring to FIG. 6, FIG. 6 is a partially enlarged view at part A of the battery cell 10 shown in FIG. 5. The connecting part 32 is welded to the shell 1 and forms the welded portion 6. Along the first direction Z, the welded portion 6 does not extend beyond the first outer surface 311 in a direction away from the electrode assembly 2.

The welded portion 6 is the portion that connects the connecting part 32 to the shell 1. The welded portion 6 is connected to both the shell 1 and the connecting part 32, and the welded portion 6 can be a weld mark region formed by welding the connecting part 32 to the shell 1. The welded portion 6 extends along the circumference of the end cap 3 to realize a sealing connection between the connecting part 32 and the shell 1. The welded portion 6 can be a ring-shaped structure extending along the circumference of the end cap 3.

The welded portion 6 does not extend beyond the first outer surface 311 in a direction away from the electrode assembly 2 such that the welded portion 6 does not protrude from the first outer surface 311. It can be that the welded portion 6 is closer to the electrode assembly 2 than the first outer surface 311 along the first direction Z. It can also be that the edge of the welded portion 6 furthest away from the electrode assembly 2 along the first direction Z is flush with the first outer surface 311.

In the embodiment, the welded portion 6 does not protrude beyond the first outer surface 311, thus reducing the impact of the welded portion 6, formed by welding the connecting part 32 to the shell 1, on the first outer surface 311. This improves the stability of the battery cell 10 when the first outer surface 311 serves as a supporting surface.

In some embodiments, referring to FIG. 6, along the first direction Z, the welded portion 6 is closer to the electrode assembly 2 than the first outer surface 311.

Understandably, along the first direction Z, the welded portion 6 is at a certain distance from the first outer surface 311, and any position of the welded portion 6 is closer to the electrode assembly 2 than the first outer surface 311. This further reduces the impact of the welded portion 6 on the first outer surface 311.

In some embodiments, referring to FIG. 6, along the first direction Z, the connecting part 32 is provided with a second outer surface 321 away from the electrode assembly 2; and a distance between the second outer surface 321 and the first outer surface 311 is H, satisfying 0.2mm≤H≤0.8mm.

The second outer surface 321 is the surface of the connecting part 32 farthest from the electrode assembly 2 along the first direction Z, and it is also the surface of the connecting part 32 closest to the first outer surface 311 along the first direction Z. The second outer surface 321 can be a ring-shaped plane surrounding the outer side of the cover body 31. The second outer surface 321 is parallel to the first outer surface 311. It is understandable that along the first direction Z, the second outer surface 321 is closer to the electrode assembly 2 than the first outer surface 311.

H can be any size from 0.2 to 0.8 mm, for example, 0.2 mm, 0.3 mm, 0.4 mm, 0.5 mm, 0.6 mm, 0.7 mm, and 0.8 mm.

In the embodiment, H≥0.2mm. On one hand, maintaining a certain distance between the second outer surface 321 and the first outer surface 311 can reduce the impact of the second outer surface 321 on the first outer surface 311. H≤0.8mm ensures that the end cap 3 does not occupy too much space outside the battery cell 10 due to a too large H. This allows for the full utilization of the internal space of the box 20 of the battery cell 10, thereby enhancing the energy density of the battery cell 10.

The inventors observed that during the welding process of the connecting part 32 to the shell 1, the welded portion 6, formed by welding the connection portion 32 to the shell 1, protrudes from the second outer surface 321 at a height generally less than 0.2 mm. Therefore, H is set to be not less than 0.2mm. This helps reduce the probability of the welded portion 6 protruding from the first outer surface 311 after welding the connecting part 32 to the shell 1, making it easier to ensure that the welded portion 6 does not protrude from the first outer surface 311. This enhances the stability of the battery cell 10 when the first outer surface 311 serves as a supporting surface, effectively reducing the welding difficulty of the connecting part 32 to the shell 1. In addition, even if the connecting part 32 is deformed due to welding stress during the welding process, the connecting part 32 hardly protrudes from the first outer surface 311.

In some embodiments, 0.4mm≤H≤0.6mm.

In the embodiment, H can be any size from 0.4 to 0.6 mm, for example, 0.4 mm, 0.45 mm, 0.5 mm, 0.55 mm, and 0.6 mm.

In the embodiment, the H is set within a reasonable range. Maintaining a larger distance between the second outer surface 321 and the first outer surface 311 can further reduce the impact of the second outer surface 321 on the first outer surface 311. On the other hand, ensuring that the end cap 3 does not occupy an excessively large space outside the battery cell 10 due to a too large H is beneficial for increasing the energy density of the battery 100.

In addition, with H ≥ 0.4 mm, in the process of welding the connection portion 32 to the shell 1, the welded portion 6 is difficult to protrude from the first outer surface 311, and there is no need to strictly control the height of the welded portion 6. It is able to further reduce the difficulty of welding between the connecting part 32 and the shell 1 and to improve the efficiency of welding.

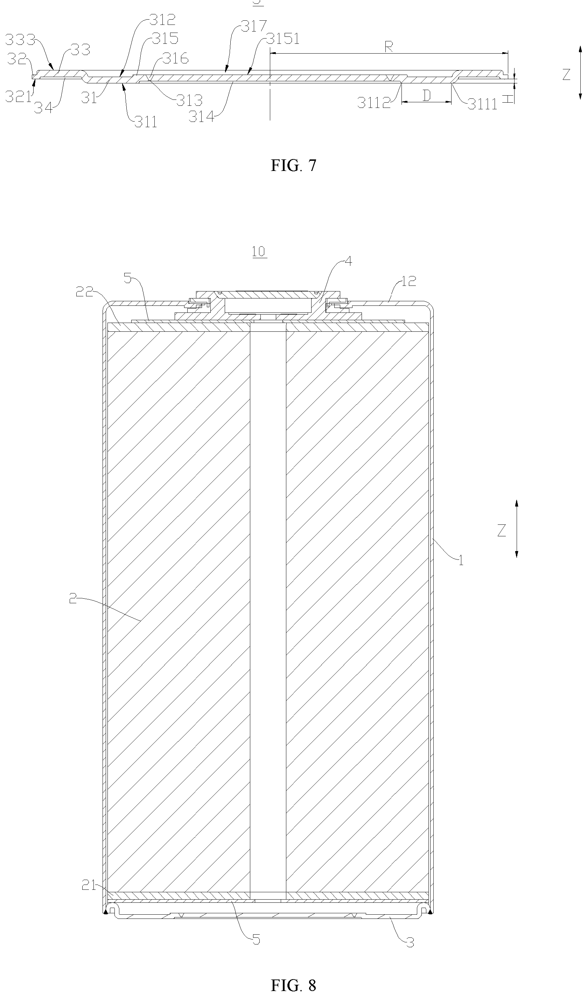

In some embodiments, referring to FIGS. 6 and 7, FIG. 7 is a schematic view of the structure of the end cap 3 shown in FIG. 6. The end cap 3 further comprises a transition part 33, and the transition part 33 connects the cover body 31 and the connecting part 32.

The transition part 33 is a portion of the end cap 3 arranged between the cover body 31 and the connecting part 32 and connecting the cover body 31 and the connecting part 32. The cover body 31, the connecting part 32, and the transition part 33 can be integrally molded. The transition part 33 is closer to the electrode assembly 2 than the first outer surface 311 along the first direction Z. Taking the end cap 3 of a circular structure as an example, the transition part 33 can be a ring-shaped structure located between the cover body 31 and the connecting part 32.

In the embodiment, the transition part 33 enables a certain distance to be maintained between the connecting portion 32 and the cover body 31, thus reducing the impact of the connecting part 32, after being connected to the shell 1, on the cover body 31. Taking the welding of the connecting part 32 to the shell 1 as an example, when the connecting part 32 is welded to the shell 1, the connecting part 32 generates welding stress during welding. The arrangement of the transition part 33 reduces the risk of the welding stress being transferred to the cover body 31, reduces the risk of deformation of the cover body 31, and ensures the flatness of the first outer surface 311.

In some embodiments, referring to FIGS. 6 and 7, the transition part 33 is arranged around an outer side of the cover body 31, and the connecting part 32 is arranged around an outer side of the transition part 33; and along the first direction Z, at least a portion of the transition part 33 protrudes from the cover body 31 in a direction facing the electrode assembly 2.

The transition part 33 can be connected to an outer edge of the cover body 31, and the connecting part 32 can be connected to the outer edge of the transition part 33. Taking the end cap 3 of a circular structure as an example, the cover body 31 can be a circular structure located in the center region of the end cap 3, and the transition part 33 can be a ring-shaped structure provided around an outer edge of the cover body 31, and the connecting part 32 can be a ring-shaped structure provided around an outer edge of the transition part 33.

Along the first direction Z, the cover body 31 is provided with a first inner surface 312 facing the electrode assembly 2, and the first inner surface 312 is provided opposite to the first outer surface 311. The transition part 33 partially protrudes from the first inner surface 312, which can be understood as at least a portion of the transition part 33 protruding from the cover body 31 in the direction facing the electrode assembly 2. If the portion of the transition part 33 protrudes from the cover body 31 in the direction facing the electrode assembly 2, then a portion of the transition part 33 protrudes from the first inner surface 312. If the transition part 33 protrudes entirely from the cover body 31 in the direction facing the electrode assembly 2, then the transition part 33 protrudes entirely from the first inner surface 312.

In the embodiment, the transition part 33 can strengthen the end cap 3, thus enhancing the resistance of the end cap 3 to deformation. This ensures that the end cap 3 is less prone to deformation when subjected to external forces from the battery cell 10 or internal forces within the battery cell 10, thereby improving the impact resistance of the end cap 3.

In some embodiments, referring to FIG. 6, at least a portion of the transition part 33 is arranged inside the shell 1 and forms a location fit with the shell 1.

The transition part 33 can be located entirely within the shell 1 or partially within the shell 1. Exemplarily, in FIG. 6, at least a portion of the transition part 33 is arranged inside the shell 1 and forms a location fit with the shell 1.

The portion of the transition part 33 located within the shell 1 forms a location fit with the shell 1, and an outer peripheral surface of the transition part 33 contacts an inner peripheral surface of the shell 1, thereby limiting movement of the transition part 33 relative to the shell 1 in a direction perpendicular to the first direction Z. Taking the end cap 3 of a circular structure as an example, the outer peripheral surface of the transition part 33 and the inner peripheral surface of the inner peripheral surface 1 are both cylindrical surfaces. After the outer peripheral surface of the transition part 33 is cooperated with the inner peripheral surface of the shell 1, it will restrict the radial movement of the end cap 3 relative to the shell 1 along the end cap 3. The outer peripheral surface of the transition part 33 and the inner peripheral surface of the shell 1 both extend in the first direction Z.

In the embodiment, the portion of the transition part 33 arranged inside the shell 1 forms a location fit with the shell 1. This improves the efficiency of the assembly of the end cap 3 to the shell 1 and facilitates the connection of the end cap 3 to the shell 1. For example, when welding the connecting part 32 to the shell 1, it is possible to first form a location fit between the transition part 33 and the shell 1. This ensures that the end cap 3 is not radially displaced during welding, making it more convenient to weld the end cap 3 to the shell 1 and improving welding efficiency.

In some embodiments, referring to FIGS. 6 and 7, along the first direction Z, a position, corresponding to the transition part 33, of a side of the end cap 3 away from the electrode assembly 2 is provided with a first concave portion 34.

The first concave portion 34 can be a ring-shaped groove surrounding the outer side of the cover body 31. The first concave portion 34 can be formed by stamping. It can be that the bottom surface of the first concave portion 34 is flush with the first inner surface 312 of the cover body 31. It can be that the bottom surface of the first concave portion 34 is located between the first outer surface 311 and the first inner surface 312. It can also be that the first inner surface 312 is located between the bottom surface of the first concave portion 34 and the first outer surface 311. Exemplarily, in FIGS. 6 and 7, along the first direction Z, the bottom surface of the first concave portion 34 is flush with the first inner surface 312 of the cover body 31, and the second outer surface 321 of the connecting part 32 is closer to the first outer surface 311 than the bottom surface of the first concave portion 34.

In the embodiment, the arrangement of the first concave portion 34 enhances the reinforcing effect of the transition part 33 on the end cap 3. Additionally, it simplifies the forming process of the transition part 33. During forming, the first concave portion 34 can be stamped on the end cap 3 to form a transition part 33 protruding from the cover body 31 in the direction facing the electrode assembly 2.

In some embodiments, referring to FIG. 6, the connecting part 32 and the shell 1 are arranged along the first direction Z; an end of the shell 1 arranged with the opening forms a first end surface 11; and the connecting part 32 is connected to the first end surface 11.

The first end surface 11 is an end face of the end of the shell 1 provided with the opening. Taking the shell 1 of a cylindrical structure as an example, the first end surface 11 can be a ring-shaped plane. The connecting part 32 can be connected to the first surface in a variety of ways, such as, welding, bonding, and the like. The connecting part 32 is connected to the first end surface 11 such that the connecting part 32 is fixed to the first end surface 11 after being connected to the shell 1.

In the embodiment where a side of the end cap 3, away from the electrode assembly 2 at a position corresponding to the transition part 33, is provided with a first concave portion 34, the bottom surface of the first concave portion 34 can be further away from the first outer surface 311 along the first direction Z than the second outer surface 321 of the connecting part 32.

In the embodiment where the transition part 33 forms a location fit with the shell 1, the contact between the outer peripheral surface of the transition part 33 and the inner peripheral surface of the shell 1 can form a sealing interface. The contact between the surface of the connecting part 32 facing the shell 1 and the first end surface 11 can also form a sealing interface. This increases the contact area between the end cap 3 and the shell 1, thereby improving the sealing between the end cap 3 and the shell 1.

In the embodiment, the connecting part 32 and the shell 1 are arranged along the first direction Z. The first end surface 11 can limit the end cap 3, which limits the movement of the end cap 3 in the direction towards the electrode assembly 2, thus facilitating the connection of the end cap 3 to the shell 1.

In some embodiments, referring to FIG. 6, the connecting part 32 is welded to the first end surface 11.

The connecting part 32 can abut against the first end surface 11 and be welded to the first end surface 11. Along the first direction Z, the surface of the connecting part 32 facing the shell 1 contacts the first end surface 11, which forms a welding interface. When the connecting part 32 is welded to the shell 1, welding can be performed along the welding interface between the connecting part 32 and the shell 1 to achieve a fillet welding of the connecting part 32 and the shell 1, ultimately forming a welded portion 6 extending circumferentially along the end cap 3. The outer peripheral surface of the connecting part 32 can be flush with the outer peripheral surface of the shell 1, and the welded portion 6 formed after the connecting part 32 is welded to shell 1 can protrude locally from the outer peripheral surface of the shell 1 and the outer peripheral surface of the connecting part 32.

In the embodiment where the transition part 33 forms a location fit with the shell 1, during the assembly of the shell 1 and the end cap 3, the transition part 33 can first form a location fit with the shell 1, and the connecting part 32 abuts against the first end surface 11. Then, the connecting part 32 is welded to the first end surface 11. During the welding process, the end cap 3 is prevented from experiencing radial and axial displacement with respect to the shell 1, thereby improving welding efficiency.

In the embodiments, the connecting part 32 is welded to the first end surface 11. The method of fixing the connecting part 32 to the shell 1 is simpler, thus enhancing the firmness of the connection of the connecting part 32 to the shell 1. By welding the connecting part 32 to the first end surface 11, a sealed connection between the end cap 3 and the shell 1 can be achieved.

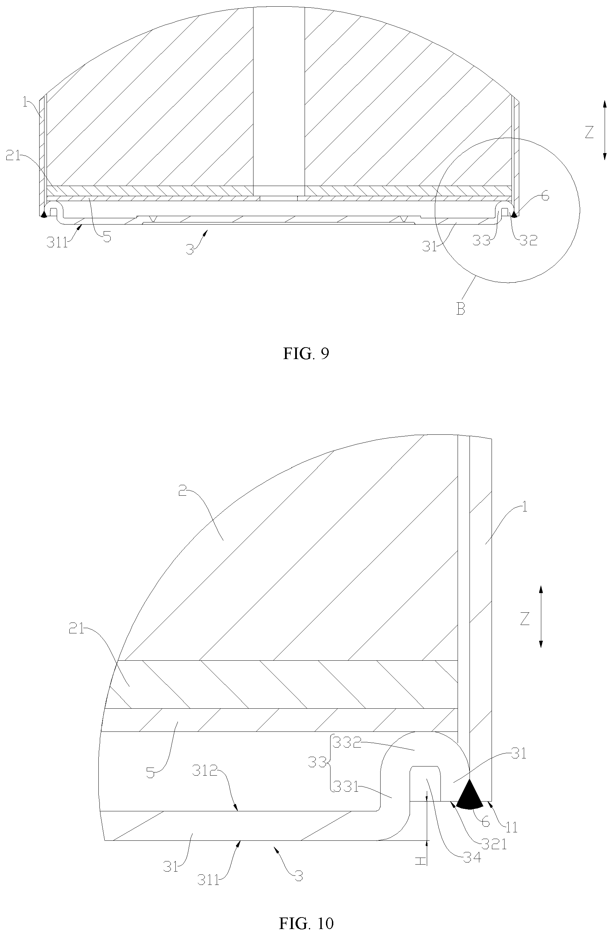

In some embodiments, referring to FIGS. 8 to 10, FIG. 8 is a schematic diagram of a structure of a battery cell 10 provided in some other embodiments of the present disclosure, FIG. 9 is a partial sectional view of the battery cell 10 shown in FIG. 8; and FIG. 10 is a partially enlarged view at part B of the battery cell 10 shown in FIG. 9. The connecting part 32 is connected to an inner peripheral surface of the shell 1.

The inner peripheral surface of the shell 1 extends along the first direction Z. Taking the shell 1 of a cylindrical structure as an example, the inner peripheral surface of the shell 1 is cylindrical. The connecting part 32 can be connected to the inner peripheral surface of the shell 1 in a variety of ways, such as, for example, welding, bonding, and the like. The connecting part 32 is connected to the inner peripheral surface of the shell 1, ensuring that after the connecting part 32 is connected to the shell 1, it is fixed to the inner peripheral surface of the shell 1.

In the case where the connecting part 32 is connected to the inner peripheral surface of the shell 1, the transition part 33 and the shell 1 can form a location fit. Alternatively, the location fit may not be formed. Exemplarily, in FIGS. 8 to 10, the transition part 33 does not form a location fit with the shell 1.

In the embodiment, the connecting part 32 is connected to an inner peripheral surface of the shell 1. On the one hand, it simplifies the structure of the end cap 3, which can reduce the radial size of the end cap 3. On the other hand, during the assembly of the end cap 3 and the shell 1, the position of the end cap 3 along the first direction Z can be adjusted as needed before fixing the end cap 3 and the shell 1. During the mounting of the end cap 3, adjusting the position of the end cap 3 in the first direction Z adjusts the position of the transition part 33, thereby restricting the movement of the transition part 33 along the first direction Z relative to the electrode assembly 2.

In some embodiments, referring to FIG. 10, the connecting part 32 is welded to an inner peripheral surface of the shell 1.

The outer peripheral surface of the connecting part 32 can abut against the inner peripheral surface of the shell 1 such that the outer peripheral surface of the connecting part 32 forms a location fit with the inner peripheral surface of the shell 1. The outer peripheral surface of the connecting part 32 contacts the inner peripheral surface of the shell 1, which can form a welding interface. When the connecting part 32 is welded to the shell 1, welding can be performed along the welding interface between the connecting part 32 and the shell 1 to achieve a fillet welding of the connecting part 32 and the shell 1, ultimately forming a welded portion 6 extending circumferentially along the end cap 3. The outer peripheral surface of the connecting part 32 extends along the first direction Z. Taking the end cap 3 of a circular structure as an example, the outer peripheral surface of the connecting part 32 is a cylindrical surface.

In the embodiments, the connecting part 32 is welded to the inner peripheral surface of the shell 1. The method of fixing the connecting part 32 to the shell 1 is simpler, thus enhancing the firmness of the connection of the connecting part 32 to the shell 1. By welding the connecting part 32 to the inner peripheral surface of the shell 1, a sealed connection between the end cap 3 and the shell 1 can be achieved.

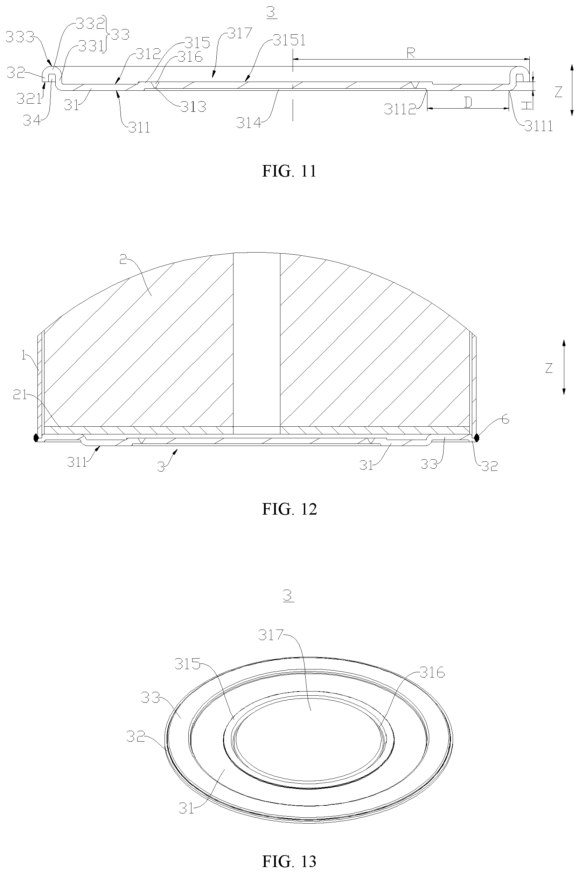

In some embodiments, referring to FIGS. 10 and 11, FIG. 11 is a schematic view of the structure of the end cap 3 shown in FIG. 10. The transition part 33 comprises a first part 331 and a second part 332; the first part 331 is arranged around the outer side of the cover body 31, and the connecting part 32 is arranged around an outer side of the first part 331; the second part 332 connects the first part 331 and the connecting part 32; and the first part 331, the second part 332, and the connecting part 32 together define a first concave portion 34 facing away from the electrode assembly 2.

The first part 331 is connected to the cover body 31 and protrudes from the cover body 31 in a direction close to the electrode assembly 2. Along the first direction Z, the cover body 31 is provided with a first inner surface 312 facing the electrode assembly 2, and the first inner surface 312 is provided opposite to the first outer surface 311. The first part 331 protrudes from the first inner surface 312. The first part 331 is arranged on the inner side of the connecting part 32, and a gap is provided between the first part 331 and the connecting part 32. Taking the first part 331 and the connecting part 32 of a ring shape as an example, the first part 331 and the connecting part 32 can be coaxially provided.

The second part 332 is the portion of the transition part 33 connecting the first part 331 and the connecting part 32, and the second part 332 can be a ring-shaped structure connected between the first part 331 and the connecting part 32. The first part 331, the second part 332, and the connecting part 32 are sequentially connected such that the transition part 33 is substantially U-shaped in cross-section. The cross-section of the transition part 33 is parallel to the first direction Z.

The first concave portion 34 is a slot defined by the first part 331, the second part 332, and the connecting part 32 together. The first part 331, the second part 332, and the connecting part 32 form three slot walls of the slot, respectively. The first concave portion 34 can be a ring-shaped slot.

In the embodiment, the transition part 33 and the connecting part 32 can entirely strengthen the end cap 3, thus enhancing the deformation capacity of the end cap 3. This ensures that the end cap 3 is less prone to deformation when subjected to external forces from the battery cell 10 or internal forces within the battery cell 10, thereby improving the impact resistance of the end cap 3.

In some embodiments, referring to FIGS. 10 and 11, along the first direction Z, the connecting part 32 is provided with a second outer surface 321 away from the electrode assembly 2; an end of the shell 1 arranged with the opening forms a first end surface 11; and the second outer surface 321 is flush with the first end surface 11.

The second outer surface 321 is the surface of the connecting part 32 closest to the first outer surface 311 along the first direction Z. In FIGS. 10 and 11, the second outer surface 321 is also an end surface of the end of the connecting part 32 along the first direction Z away from the second part 332. The second outer surface 321 is closer to the first outer surface 311 than the bottom surface of the first concave portion 34. The second outer surface 321 is flush with the first end surface 11 such that the second outer surface 321 and the first end surface 11 are in the same plane.

In embodiments where the first connecting part 32 is welded to the shell 1 to form the welded portion 6, the welded portion 6 can be locally protruding from the second outer surface 321 and the first end surface 11.

In the embodiment, the second outer surface 321 is flush with the first end surface 11, which allows the first end surface 11 to be closer to the electrode assembly 2 than the first outer surface 311, thus reducing the impact of the first end surface 11 on the first outer surface 311. This improves the stability of the battery cell 10 when the first outer surface 311 serves as a supporting surface. In addition, the height difference between the first end surface 11 and the second outer surface 321 is eliminated, which makes it easier to achieve a stable welding of the connecting part 32 and the shell 1, and improves the firmness of the connecting part 32 and the shell 1 after welding.

In some embodiments, referring to FIGS. 5, 9, and 12, FIG. 12 is a partial view of the battery cell 10 provided in some other embodiments of the present disclosure. The electrode assembly 2 is provided with a first tab 21; the transition part 33 is connected to the first tab 21 to achieve electrical connection between the end cap 3 and the electrode assembly 2.

The transition part 33 and the first tab 21 can be connected directly or indirectly via an intermediate member. The first tab 21 in the electrode assembly 2 connected to the transition part 33 can be a positive tab or a negative tab. Exemplarily, in FIGS. 5, 9, and 12, the first tab 21 is a negative tab.

In the embodiment, the transition part 33 is the portion of the end cap 3 that is connected to the first tab 21; and by connecting the transition part 33 to the first tab 21, an electrical connection between the end cap 3 and the electrode assembly 2 is achieved.

In some embodiments, referring to FIG. 12, along the first direction Z, the transition part 33 abuts against the first tab 21.

It can be that the transition part 33 abuts against the first tab 21 and the transition part 33 remains in contact with the current collector component 5 only, or it can be that the transition part 33 abuts against the first tab 21 and the transition part 33 is fixedly connected to the current collector component 5. For example, in FIG. 12, the transition part 33 is welded to the current collector component 5.

In the embodiment, the transition part 33 is directly connected to the first tab 21, and no intermediate member is provided between the transition part 33 and the first tab 21, which simplifies the structure of the battery cell 10, and can make full use of the internal space of the battery cell 10 to improve the energy density of the battery cell 10.

In some embodiments, referring to FIGS. 5 and 9, the battery cell 10 further comprises a current collector component 5, and the current collector component 5 connects the transition part 33 and the first tab 21. Along the first direction Z, the current collector component 5 is arranged between the first tab 21 and the end cap 3, with the transition part 33 abutting against the current collector component 5.

The current collector component 5 is a conductive member connecting the transition part 33 and the first tab 21. The current collector component 5 and the first tab 21 can be fixedly connected. For example, the current collector component 5 is welded to the first tab 21; or the current collector component 5 and the first tab 21 can also be connected by only maintaining contact. It can be that the transition part 33 abuts against the current collector component 5 and the transition part 33 remains in contact with the current collector component 5 only, or it can be that the transition part 33 abuts against the current collector component 5 and the transition part 33 is fixedly connected to the current collector component 5. For example, the transition part 33 is welded to the current collector component 5. Exemplarily, in FIGS. 5 and 9, both the transition part 33 and the first tab 21 are welded to the current collector component 5.

In the embodiment, the transition part 33 is indirectly connected to the first tab 21 via the current collector component 5, thereby achieving good current flow between the first tab 21 and the end cap 3.

In some embodiments, the first outer surface 311 is configured to support the battery cell 10.

In the embodiment, the first outer surface 311 serves as a supporting surface of the battery cell 10. When the battery cell 10 is placed on the external components, the first outer surface 311 is located at the bottom of the battery cell 10 and the first outer surface 311 contacts the external components for supporting the battery cell 10, thus providing good stability when the battery cell 10 is placed on the external components.

In the case where the external component is a hot management component, when assembling the battery 100, the battery cell 10 is placed on the hot management component, which enables a larger contact area between the first outer surface 311 of the battery cell 10 and the hot management component. On the one hand, this allows a better posture of the battery cell 10 when placed on the external component, thereby enhancing the stability of the battery cell 10 after placement on the external components. On the other hand, the heat transfer efficiency between the hot management component and the battery cell 10 is improved.

In some embodiments, referring to FIGS. 7 and 11, the cover body 31 is provided with a weak part 313, and the weak part 313 is configured to be damaged when the battery cell 10 is relieved of pressure so as to release the pressure inside the battery cell 10.

The weak part 313 is a weaker portion of the cover body 31, and the weak part 313 is more susceptible to breakage compared to other regions of the cover body 31. A localized region of the cover body 31 can be weakened to form a weak part 313. For example, the thickness of the localized region of the cover body 31 is reduced to correspond to the formation of the weak part 313. Furthermore, a localized region of the cover body 31 is annealed to correspond to the formation of the weak part 313. A variety of ways are provided, in which the pressure relief portion can be damaged, such as rupture, disengagement.

When the pressure inside the battery cell 10 reaches the bursting pressure, the weak part 313 will be damaged under the action of the emissions (gas, electrolyte, etc.) inside the battery cell 10, thus realizing the pressure relief of the battery cell 10.

In the embodiment where the connecting part 32 is connected to the cover body 31 by the transition part 33, the transition part 33 can reduce the risk of stress generated by the connecting part 32 being transferred to the cover body 31 so as to reduce the impact on the weak part 313 in the process of the connection of the connecting part 32 to the shell 1, and the transition part 33 can play a protective role for the transition part 313.

In the embodiment, the arrangement of the weak part 313 enables the end cap 3 to have a functionality of the pressure relief, and the end cap 3 can serve as a pressure relief component for the battery cell 10.

In some embodiments, referring to FIGS. 7 and 11, along the first direction Z, the cover body 31 is provided with a second concave portion 314 that is concave from the first outer surface 311 in a direction towards to the electrode assembly 2; and a projection of a bottom surface of the second concave portion 314 covers the weak part 313.

The second concave portion 314 can be a cylindrical groove, a rectangular groove, or the like provided on the first outer surface 311. The projection of the bottom surface of the second concave portion 314 along the first direction Z covers the weak part 313. It is understood that the projection of the weak part 313 along the first direction Z is located within the bottom surface of the second concave portion 314.

The arrangement of the second concave portion 314 ensures that there is a certain distance between the weak part 313 and the first outer surface 311. When the first outer surface 311 contacts external components, it reduces the impact of external components on the weak part 313. This allows the weak part 313 to be smoothly damaged when the pressure inside the battery cell 10 reaches the normal bursting pressure, which reduces the risk of increased bursting pressure of the battery cell 10 due to the obstruction to the weak part 313 by the external components.

In some embodiments, referring to FIGS. 7 and 11, along the first direction Z, the cover body 31 is provided with a first inner surface 312 facing the electrode assembly 2, and the first inner surface 312 is provided with a protrusion 315 at a position corresponding to the second concave portion 314.

The shape of the protrusion 315 can be the same as the shape of the second concave portion 314. Taking the example that the second concave portion 314 is a cylindrical slot, the protrusion 315 can be a cylindrical boss protruding from the first inner surface 312. The second concave portion 314 can be formed by stamping. When the second concave portion 314 is stamped and molded on the first outer surface 311, a protrusion 315 can be formed correspondingly on the first inner surface 312.

Exemplarily, along the first direction Z, the protrusion 315 is provided with a second inner surface 3151 facing the electrode assembly 2, and the transition part 33 is provided with a third inner surface 333 facing the electrode assembly 2. The second inner surface 3151 is closer to the first outer surface 311 compared to the third inner surface 333. In the embodiment where the transition part 33 abuts against the first tab 21, the third inner surface 333 is configured to abut against the first tab 21. In the embodiment where the transition part 33 abuts against the current collector component 5, the third inner surface 333 is configured to abut against the current collector component 5.

In the embodiment, the arrangement of the protrusion 315 can increase the strength of a region on the cover body 31 where the second concave portion 314 is arranged.

In some embodiments, referring to FIGS. 7 and 11, along the first direction Z, the protrusion 315 is provided with a second inner surface 3151 facing the electrode assembly 2; the second inner surface 3151 and/or the bottom surface of the second concave portion 314 are provided with a scored groove 316; and the cover body 31 forms the weak part 313 at a position corresponding to the scored groove 316.

The second inner surface 3151 is an end surface of the protrusion 315 furthest from the first outer surface 311 along the first direction Z. After the cover body 31 is provided with the scored groove 316, the residual portion of the cover body 31 at the location where the scored groove 316 is provided is the weak part 313. The scored groove 316 can be of various shapes, such as, for example, a rectangular shape, a round shape, an oval shape, a ring shape, a circular arc shape, a U-shape, an H-shape, and the like. The scored groove 316 can be formed in various ways, such as stamping, milling and machining, and so on.

It can be that the scored groove 316 is provided on the second inner surface 3151; it can be that the scored groove 316 is provided on the bottom surface of the second concave portion 314; or it can be that the scored grooves 316 are provided on both the second inner surface 3151 and the bottom surface of the second concave portion 314. In this case, the scored groove 316 provided on the second inner surface 3151 and the scored groove 316 provided on the bottom surface of the second concave portion 314 are arranged opposite to each other along the first direction Z. Exemplarily, in FIGS. 7 and 11, the scored groove 316 is provided on the second inner surface 3151 such that the scored groove 316 faces the interior of the battery cell 10. The scored groove 316 is not exposed to the exterior of the battery cell 10, thus reducing the risk of oxidization at the location where the cover body 31 is provided with the scored groove 316 due to exposure to the exterior of the battery cell 10, and improving the service life of the end cap 3.

In the embodiment, by a method of arranging the scored groove 316 on the second inner surface 3151 and/or the bottom surface of the second concave portion 314, a weak part 313 is correspondingly formed, making the thickness of the weak part 313 thinner compared to the thickness of the other regions, which is easier to be destroyed. This method simplifies the formation of the weak part 313.

In some embodiments, referring to FIGS. 7 and 11, the end cap 3 is circular. The first outer surface 311 is provided with a first outer edge 3111 and a first inner edge 3112, wherein the first outer surface 311 intersects with an inner side surface of the second concave portion 314 at the first inner edge 3112; and along a radial direction of the end cap 3, a distance between the first outer edge 3111 and the first inner edge 3112 is D, and a radius of the end cap 3 is R, satisfying D/R≥0.1.

D/R can be 0.1, 0.2, 0.3, 0.4, 0.5, 0.6, 0.7, 0.8, 0.9, etc.

Both the first outer edge 3111 and the first inner edge 3112 can be circular. The first outer edge 3111 and the first inner edge 3112 can be arranged concentrically. The first outer surface 311 is a ring-shaped plane between the first outer edge 3111 and the first inner edge 3112. The distance D between the first outer edge 3111 and the first inner edge 3112 is the difference between the radius of the first outer edge 3111 and the radius of the first inner edge 3112. In embodiments where the end cap 3 is provided with a first concave portion 34, the first outer surface 311 intersects the inner side surface of the first concave portion 34 at the first outer edge 3111.

In the embodiment, D/R≥0.1 allows the first outer surface 311 to have a larger area such that the first outer surface 311 has a larger contact area after contact with the external components, thus enhancing the stability of the battery cell 10.

In some embodiments, D/R≤0.4.

D/R can be 0.1, 0.15, 0.2, 0.25, 0.3, 0.35, 0.4, etc.

If D/R is too large, it can result in a smaller size of the second concave portion 314 in the radial direction of the end cap 3; and the weak part 313 is constrained by the second concave portion 314 and cannot be made larger, resulting in a smaller pressure relief area for the end cap 3. Therefore, it becomes difficult to meet the requirements for the bursting pressure of the battery cell 10. While D/R ≤ 0.4, the pressure relief area of the end cap 3 can be increased to meet the requirements for the bursting pressure of the battery cell 10.

In some embodiments, the cover body 31 is provided with a scored groove 316; and the cover body 31 forms the weak part 313 at a position corresponding to the scored groove 316.

In embodiments where the cover body 31 is not provided with the second concave portion 314 and the protrusion 315, the scored groove 316 can be provided on the first outer surface 311 and/or the first inner surface 312 of the cover body 31. Referring to FIGS. 7 and 11, in embodiments where the cover body 31 is provided with the second concave portion 314 and the protrusion 315, the scored groove 316 can be provided on the second inner surface 3151 of the protrusion 315 and the bottom surface of the second concave portion 314.

In the embodiment, by a method arranging the scored groove 316 on the cover body 31, a weak part 313 is correspondingly formed, making the thickness of the weak part 313 thinner compared to the thickness of the other regions, which is easier to damage. This method simplifies the formation of the weak part 313.

In some embodiments, referring to FIGS. 7 and 11, the cover body 31 is provided with a pressure relief region 317; the scored groove 316 is arranged along an edge of the pressure relief region 317; and the pressure relief region 317 is configured to open with the scored groove 316 as a boundary when the battery cell 10 is relieved of pressure.

The pressure relief region 317 is a portion of the cover body 31 capable of opening with the scored groove 316 as a boundary when the battery cell 10 is relieved of pressure. When the pressure relief region 317 is opened, the cover body 31 will form a discharge port at a position corresponding to the pressure relief region 317, and the emissions inside the battery cell 10 can be discharged through the discharge port to vent the pressure inside the battery cell 10. The pressure relief region 317 can open in an outwardly flipped or disengaged manner.

In the embodiment where the first outer surface 311 is provided in the second concave portion 314, since the projection of the bottom surface of the second concave portion 314 along the first direction Z covers the weak part 313, it is understandable that the bottom surface of the first concave portion 34 is at least partially arranged in the pressure relief region 317, and the second concave portion 314 can provide an opening space for the pressure relief region 317. The pressure relief region 317 can also open to relieve pressure when the first outer surface 311 contacts the external components, thus improving the safety of the battery cell 10.

In the embodiment, the cover body 31 is provided with a pressure relief region 317, which increases the pressure relief area of the battery cell 10 and improves the efficiency of the pressure relief.

In some embodiments, the scored groove 316 is a groove extending along a closed trajectory.

The closed trajectory can be of various shapes, e.g., circular trajectory, rectangular trajectory, elliptical trajectory.

When the battery cell 10 is relieving pressure, the pressure relief region 317 can be opened in a manner that is detached from the outside of the battery cell 10. This enables the battery cell 10 to have a larger pressure relief area, which improves the efficiency of the pressure relief.

In some embodiments, referring to FIG. 13, FIG. 13 is an axonometric drawing of the end cap 3 shown in FIG. 7. The scored groove 316 is ring-shaped.

Understandably, the scored groove 316 is a groove that extends along a circular trajectory. The ring-shaped scored groove 316 has a simpler structure and is easy to mold.

In other embodiments, the scored groove 316 can also extend the groove along a non-closed trajectory to define the pressure relief region 317, e.g., a curved groove, a U-shaped groove, and the like.

In some embodiments, referring to FIGS. 4 and 8, the battery cell 10 further comprises an electrode terminal 4; along the first direction Z, the shell 1 is provided with a wall portion 12 opposite to the end cap 3, and the electrode terminal 4 is arranged on the wall portion 12 and protrudes at least partially from a surface of the wall portion 12 away from the end cap 3; and the electrode assembly 2 is provided with a second tab 22, wherein the second tab 22 is electrically connected to the electrode terminal 4.

In the embodiments, the shell 1 is a hollow structure with an opening formed at one end. The shell 1 further comprises a peripheral wall. Along the first direction Z, the wall portion 12 is located at one end of the peripheral wall. The peripheral wall forms an opening at the end opposite to the wall portion 12, and the peripheral wall is integrally molded with the wall portion 12. The surface of the wall portion 12 away from the end cap 3 is an outer surface of the wall portion 12.

The electrode terminal 4 is connected to the wall portion 12 in a variety of ways, for example, bonding, riveting, and the like. Exemplarily, in FIGS. 4 and 8, the electrode terminal 4 is riveted to the wall portion 12. The wall portion 12 is provided with a lead-out hole, and the electrode terminal 4 is threaded through the lead-out hole. A portion of the electrode terminal 4 protrudes from a surface of the wall portion 12 away from the end cap 3. The electrode terminal 4 partially protrudes from a surface of the wall portion 12 facing the end cap 3.

The second tab 22 can be a positive tab, or it can be a negative tab. The second tab 22 can be connected to the electrode terminal 4 either directly or indirectly. Exemplarily, in FIGS. 4 and 8, the second tab 22 is a positive tab. The second tab 22 is indirectly connected to the electrode terminal 4 via the current collector component 5, wherein both the second tab 22 and the electrode terminal 4 are welded to the current collector component 5.

In the embodiment, the electrode terminal 4 is arranged on the wall portion 12 of the shell 1 opposite to the end cap 3 and the electrode terminal 4 is not arranged on the end cap 3, thus allowing the end cap 3 to serve as a supporting component for the battery cell 10. Therefore, the first outer surface 311 of the end cap 3 can make good contact with external components, thus providing stable support for the battery cell 10 by the external components. It makes the battery cell 10 less prone to tilting after it is arranged on the external components, thus facilitating the connection of the electrode terminal 4 to the conductive component (e.g., the busbar component) and ensuring a stable connection of the conductive components to the electrode terminal 4.

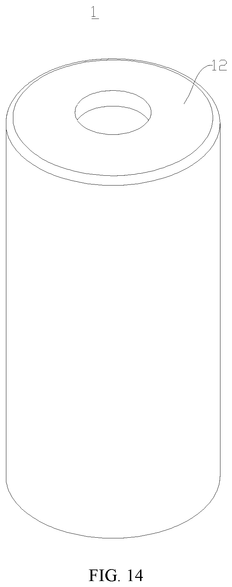

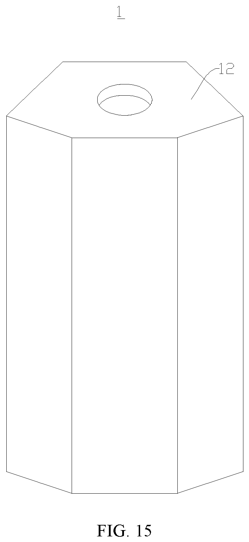

In some embodiments, referring to FIGS. 14 and 15, FIG. 14 is a structural schematic diagram of a shell 1 provided in some embodiments of the present disclosure; and FIG. 15 is a structural schematic diagram of a shell 1 provided in some embodiments of the present disclosure. The shell 1 is of cylinder or polygon prism.

In FIG. 14, the shell 1 is of cylindrical structure. A polygon prism can be trigonal, quadrilateral, pentagonal, hexagonal, etc. Exemplarily, in FIG. 15, the shell 1 is of a hexagonal prism.

The embodiments of the present disclosure provide a battery 100, comprising any of the battery cells 10 provided in the above embodiments.

The embodiments of the present disclosure provide an electrical device, comprising any of the batteries 100 provided in the above embodiments.

Additionally, referring to FIGS. 4 to 7, the embodiments of the present disclosure provide a battery cell 10, comprising a shell 1, an electrode assembly 2, an end cap 3, an electrode terminal 4, and two current collector components 5. The shell 1 is cylindrical. Along the first direction Z, an opening is formed at one end of the shell 1, and the shell 1 is provided with a wall portion 12 opposite to the opening. The electrode assembly 2 is accommodated within the shell 1. The electrode assembly 2 is provided with opposing first tab 21 and second tab 22. The end cap 3 closes the opening of the shell 1. The electrode terminal 4 is riveted to the wall portion 12. The end cap 3 is connected to the first tab 21 via a current collector component 5. The electrode terminal 4 is connected to the second tab 22 via another current collector component 5.

The end cap 3 comprises a cover body 31, a connecting part 32, and a transition part 33, wherein the transition part 33 is arranged around an outer side of the cover body 31, the connecting part 32 is arranged around an outer side of the transition part 33, and the transition part 33 connects the cover body 31 and the connecting part 32. Along the first direction Z, the transition part 33 protrudes from the cover body 31 in a direction facing the electrode assembly 2. The transition part 33 extends into the shell 1 and forms a location fit with the shell 1. A position of a side of the end cap 3 away from the electrode assembly 2, corresponding to the transition part 33, is provided with a first concave portion 34. The end cap 3 forms a first end surface 11 at the end where the opening is provided. The connecting part 32 is welded to the first end surface 11 and forms a welded portion 6 that extends in a circumferential direction along the end cap 3 to realize a sealing connection between the connecting part 32 and the shell 1. Along the first direction Z, the cover body 31 is provided with a first outer surface 311 away from the electrode assembly 2; the first outer surface 311 is a surface of the end cap 3 farthest from the electrode assembly 2. The first outer surface 311 is configured to support the battery cell 10. The connecting part 32 is closer to the electrode assembly 2 than the first outer surface 311. Along the first direction Z, the connecting part 32 is provided with a second outer surface 321 away from the electrode assembly 2. The second outer surface 321 has a height difference from the first outer surface 311 to provide an avoiding space for the welding section 6 so that the welded portion 6 does not extend beyond the first outer surface 311 in a direction away from the electrode assembly 2.

In addition, along the first direction Z, the cover body 31 is provided with a second concave portion 314 that is concave from the first outer surface 311 in a direction towards to the electrode assembly 2. The cover body 31 is provided with a first inner surface 312 facing the electrode assembly 2, and the first inner surface 312 is provided with a protrusion 315 at a position corresponding to the second concave portion 314. The protrusion 315 is provided with a second inner surface 3151 facing the electrode assembly 2. The second inner surface 3151 is provided with a scored groove 316. The scored groove 316 is ring-shaped. The cover body 31 forms the weak part 313 at a position with the scored groove 316. The weak part 313 is configured to be damaged when the battery cell 10 is relieved of pressure so as to release the pressure inside the battery cell 10. An area where the bottom surface of the second concave portion 314 is projected along the first direction Z covers the weak part 313.

It should be noted that, without conflict, the embodiments and features described in the present disclosure can be combined with each other.

The above embodiments are provided only to illustrate the technical solutions of the present disclosure and are not intended to limit the scope of the present disclosure. For those skilled in the art, various modifications and changes can be made to the present disclosure. Any modification, equivalent substitution, improvement, etc. made within the spirit and principles of the present disclosure shall be included in the scope of protection of the present disclosure.

## Claims

1. A battery cell, comprising:
a shell, provided with an opening;
an electrode assembly, accommodated within the shell; and
an end cap, arranged at one end of the shell along a first direction and closing the opening, wherein the end cap comprises a cover body and a connecting part; the connecting part is arranged around an outer side of the cover body; and the connecting part is sealingly connected to the shell,
wherein along the first direction, the cover body is provided with a first outer surface away from the electrode assembly; the first outer surface is a surface of the end cap farthest from the electrode assembly; and the connecting part is closer to the electrode assembly than the first outer surface.

2. The battery cell according to claim 1, wherein the connecting part is welded to the shell, to form a welded portion; and
along the first direction, the welded portion does not extend beyond the first outer surface in a direction away from the electrode assembly.

3. The battery cell according to claim 2, wherein along the first direction, the welded portion is closer to the electrode assembly than the first outer surface.

4. The battery cell according to any one of claims 1 to 3, wherein along the first direction, the connecting part is provided with a second outer surface away from the electrode assembly; and a distance between the second outer surface and the first outer surface is H, satisfying a condition: 0.2mm≤H≤0.8mm.

5. The battery cell according to claim 4, wherein 0.4mm≤H≤0.6mm.

6. The battery cell according to any one of claims 1 to 5, wherein the end cap further comprises a transition part, and the transition part connects the cover body and the connecting part.

7. The battery cell according to claim 6, wherein the transition part is arranged around the outer side of the cover body, and the connecting part is arranged around an outer side of the transition part; and along the first direction, at least a portion of the transition part protrudes from the cover body in a direction facing the electrode assembly.

8. The battery cell according to claim 6 or 7, wherein at least a portion of the transition part is arranged inside the shell and forms a location fit with the shell.

9. The battery cell according to claim 7 or 8, wherein along the first direction, a position of a side of the end cap away from the electrode assembly, corresponding to the transition part, is provided with a first concave portion.

10. The battery cell according to any one of claims 6 to 9, wherein the connecting part and the shell are arranged along the first direction; an end of the shell arranged with the opening forms a first end surface; and the connecting part is connected to the first end surface.

11. The battery cell according to claim 10, wherein the connecting part is welded to the first end surface.

12. The battery cell according to any one of claims 6 to 9, wherein the connecting part is connected to an inner peripheral surface of the shell.

13. The battery cell according to claim 12, wherein the connecting part is welded to the inner peripheral surface of the shell.

14. The battery cell according to claim 12 or 13, wherein the transition part comprises a first part and a second part; the first part is arranged around the outer side of the cover body, and the connecting part is arranged around an outer side of the first part; the second part connects the first part and the connecting part; and the first part, the second part, and the connecting part together define a first concave portion facing away from the electrode assembly.

15. The battery cell according to any one of claims 12 to 14, wherein along the first direction, the connecting part is provided with a second outer surface away from the electrode assembly; an end of the shell arranged with the opening forms a first end surface; and the second outer surface is flush with the first end surface.

16. The battery cell according to any one of claims 6 to 15, wherein the electrode assembly is provided with a first tab; the transition part is connected to the first tab to achieve an electrical connection between the end cap and the electrode assembly.

17. The battery cell according to claim 16, wherein along the first direction, the transition part abuts against the first tab.

18. The battery cell according to claim 16, wherein the battery cell further comprises a current collector component, and the current collector component connects the transition part and the first tab; and
along the first direction, the current collector component is arranged between the first tab and the end cap, with the transition part abutting against the current collector component.

19. The battery cell according to any one of claims 1 to 18, wherein the first outer surface is configured to support the battery cell.

20. The battery cell according to any one of claims 1 to 19, wherein the cover body is provided with a weak part, and the weak part is configured to be damaged in response to that the battery cell is relieved of pressure so as to release the pressure inside the battery cell.

21. The battery cell according to claim 20, wherein along the first direction, the cover body is provided with a second concave portion that is concave from the first outer surface in a direction towards the electrode assembly; and a projection of a bottom surface of the second concave portion covers the weak part.

22. The battery cell according to claim 21, wherein along the first direction, the cover body is provided with a first inner surface facing the electrode assembly, and the first inner surface is provided with a protrusion at a position corresponding to the second concave portion.

23. The battery cell according to claim 22, wherein along the first direction, the protrusion is provided with a second inner surface facing the electrode assembly; the second inner surface and/or the bottom surface of the second concave portion are provided with a scored groove; and the cover body forms the weak part at a position corresponding to the scored groove.

24. The battery cell according to any one of claims 21 to 23, wherein the end cap is circular;
the first outer surface is provided with a first outer edge and a first inner edge, wherein the first outer surface intersects with an inner side surface of the second concave portion at the first inner edge; and
along a radial direction of the end cap, a distance between the first outer edge and the first inner edge is D, and a radius of the end cap is R, satisfying: D/R≥0.1.

25. The battery cell according to claim 24, wherein D/R≤0.4.

26. The battery cell according to any one of claims 20 to 22 and 24 to 25, wherein the cover body is provided with a scored groove; and the cover body forms the weak part at a position corresponding to the scored groove.

27. The battery cell according to claim 26, wherein the cover body is provided with a pressure relief region; the scored groove is arranged along an edge of the pressure relief region; and the pressure relief region is configured to open with the scored groove as a boundary in response to that the battery cell is relieved of pressure.

28. The battery cell according to claim 27, wherein the scored groove is a groove extending along a closed trajectory.

29. The battery cell according to claim 27 or 28, wherein the scored groove is ring-shaped.

30. The battery cell according to any one of claims 1 to 29, wherein the battery cell further comprises an electrode terminal;
along the first direction, the shell is provided with a wall portion opposite to the end cap, and the electrode terminal is arranged on the wall portion and protrudes at least partially from a surface of the wall portion away from the end cap;
the electrode assembly is provided with a second tab, wherein the second tab is electrically connected to the electrode terminal.

31. The battery cell according to any one of claims 1 to 30, wherein the shell is of cylinder or polygon prism.

32. A battery, comprising the battery cell according to any one of claims 1 to 31.

33. An electrical device, comprising the battery according to claim 32.
